(19) Europäisches Patentamt / European Patent Office / Office européen des brevets

(11) **EP 4 156 324 A1**

(12) **EUROPEAN PATENT APPLICATION**
published in accordance with Art. 153(4) EPC

(43) Date of publication:
**29.03.2023 Bulletin 2023/13**

(21) Application number: **22771761.8**

(22) Date of filing: **16.03.2022**

(51) International Patent Classification (IPC):
**H01M 4/133** (2010.01)     **H01M 4/587** (2010.01)
**H01M 10/0525** (2010.01)     **H01M 4/02** (2006.01)

(52) Cooperative Patent Classification (CPC):
**H01M 4/02; H01M 4/133; H01M 4/587;**
**H01M 10/0525;** Y02E 60/10

(86) International application number:
**PCT/KR2022/003682**

(87) International publication number:
**WO 2022/197095 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.03.2021 KR 20210034291**

(71) Applicant: **LG Energy Solution, Ltd.**
**Seoul 07335 (KR)**

(72) Inventors:
• **HAN, Jeong-In**
  **Daejeon 34122 (KR)**
• **NOH, Tae-Gyun**
  **Daejeon 34122 (KR)**
• **JO, Mi-Ru**
  **Daejeon 34122 (KR)**
• **PARK, Sung-Bin**
  **Daejeon 34122 (KR)**

(74) Representative: **Hoffmann Eitle**
**Patent- und Rechtsanwälte PartmbB**
**Arabellastraße 30**
**81925 München (DE)**

(54) **ANODE FOR LITHIUM SECONDARY BATTERY, AND LITHIUM SECONDARY BATTERY COMPRISING SAME**

(57)     The present disclosure relates to a negative electrode for a lithium secondary battery which includes a negative electrode active material layer including a first negative electrode active material containing first graphite and an amorphous carbon layer disposed on the surface of the first graphite, and a second negative electrode active material containing second graphite and having no carbon layer on the surface of the second graphite, wherein the weight ratio of the first negative electrode active material to the second negative electrode active material is 4:6-6:4, and the negative electrode active material layer has a BET specific surface area of 1.1-1.7 $m^2/g$, and a lithium secondary battery including the same. The lithium secondary battery including the negative electrode for a lithium secondary battery allows quick charging and has improved high-temperature characteristics and safety.

FIG. 1

**Description**

TECHNICAL FIELD

The present application claims priority to Korean Patent Application No. 10-2021-0034291 filed on March 16, 2021 in the Republic of Korea.

The present disclosure relates to a negative electrode for a lithium secondary battery and a lithium secondary battery including the same. Particularly, the present disclosure relates to a negative electrode capable of quick charging/discharging and a lithium secondary battery including the same.

BACKGROUND ART

Recently, energy storage technology has been given an increasing attention. As the application of energy storage technology has been extended to energy for cellular phones, camcorders and notebook PCs and even to energy for electric vehicles, there has been an increasing need for providing batteries used as power sources for such electronic devices with high energy density. Lithium secondary batteries are those satisfying such a need best. Therefore, active studies have been conducted about such lithium secondary batteries.

In general, such a lithium secondary battery includes a positive electrode including a lithium metal oxide, a negative electrode including a carbonaceous material, etc., an electrolyte including a lithium salt and an organic solvent, and a separator interposed between the positive electrode and the negative electrode and insulating both electrodes electrically from each other.

In general, a negative electrode for a lithium secondary battery is obtained by mixing a negative electrode active material, a conductive material and a binder to prepare a slurry, coating the slurry onto a current collector, and carrying out drying and pressing. As a negative electrode active material, a carbonaceous active material, which is capable of reversible lithium-ion intercalation/deintercalation and maintains structural and electrical properties, has been used widely. Such carbonaceous active materials include various types of carbonaceous materials, such as artificial graphite, natural graphite and hard carbon. Among them, a graphite-based active material capable of ensuring the life characteristics of a lithium secondary battery by virtue of high reversibility has been used most widely.

Meanwhile, there have been continuous attempts to manufacture a lithium secondary battery capable of quick charging/discharging in order to improve the performance of a lithium secondary battery. The quick charging/discharging performance of a lithium secondary battery mainly depends on its negative electrode. For this, graphite surface-coated with carbon has been used widely as a negative electrode active material.

However, graphite surface-coated with carbon shows high surface hardness to cause cracking of particles in a pressing step during the manufacture of a negative electrode. In addition, the negative electrode shows increased surface reactivity at high temperature due to an increase in specific surface area caused by the cracking of particles, resulting in side reactions undesirably. In addition, a lithium secondary battery including the negative electrode using such a negative electrode active material shows rapid deterioration of performance and high ignitibility at high temperature, and thus has safety-related problems.

DISCLOSURE

Technical Problem

The present disclosure is designed to solve the problems of the related art, and therefore the present disclosure is directed to providing a negative electrode for quick charging/discharging which has improved high-temperature characteristics and safety.

The present disclosure is also directed to providing a lithium secondary battery including the negative electrode, capable of quick charging/discharging and having improved high-temperature characteristics and safety.

Technical Solution

In one aspect of the present disclosure, there is provided a negative electrode for a lithium secondary battery according to any one of the following embodiments.

According to the first embodiment, there is provided a negative electrode for a lithium secondary battery, including:

a negative electrode current collector; and
a negative electrode active material layer disposed on at least one surface of the negative electrode current collector, and including a first negative electrode active material containing first graphite and an amorphous carbon layer disposed on the surface of the first graphite, a second negative electrode active material containing second graphite and having no carbon layer on the surface of the second graphite, a conductive material, and a binder, wherein the weight ratio of the first negative electrode active material to the second negative electrode active material is 4:6-6:4, and

the negative electrode active material layer has a BET specific surface area of 1.1-1.7 $m^2$/g.

According to the second embodiment, there is provided the negative electrode for a lithium secondary battery as defined in the first embodiment, wherein the negative electrode active material layer has a total pore volume of 0.010-0.017 $cm^3$/g.

According to the third embodiment, there is provided the negative electrode for a lithium secondary battery as defined in the first or the second embodiment, wherein the first graphite includes natural graphite, artificial graphite, graphitized carbon fibers, graphitized mesocarbon microbeads, or two or more of them.

According to the fourth embodiment, there is provided the negative electrode for a lithium secondary battery as defined in any one of the first to the third embodiments, wherein the amorphous carbon layer includes an amorphous carbon derived from glucose, fructose, galactose, maltose, lactose, sucrose, phenolic resin, naphthalene resin, polyvinyl alcohol resin, urethane resin, polyimide resin, coal-based pitch, petroleum-based pitch, low-molecular weight heavy oil, or two or more of them.

According to the fifth embodiment, there is provided the negative electrode for a lithium secondary battery as defined in any one of the first to the fourth embodiments, wherein the amorphous carbon layer is present in an amount of 1-20 wt% based on 100 wt% of the total weight of the first negative electrode active material.

According to the sixth embodiment, there is provided the negative electrode for a lithium secondary battery as defined in any one of the first to the fifth embodiments, wherein the first negative electrode active material has an average particle diameter of 5-30 $\mu$m.

According to the seventh embodiment, there is provided the negative electrode for a lithium secondary battery as defined in any one of the first to the sixth embodiments, wherein the first negative electrode active material has a BET specific surface area of 0.5-2 $m^2$/g.

According to the eighth embodiment, there is provided the negative electrode for a lithium secondary battery as defined in any one of the first to the seventh embodiments, wherein the second graphite includes natural graphite, artificial graphite, graphitized carbon fibers, graphitized mesocarbon microbeads, or two or more of them.

According to the ninth embodiment, there is provided the negative electrode for a lithium secondary battery as defined in any one of the first to the eighth embodiments, wherein the second negative electrode active material has an average particle diameter of 13-25 $\mu$m.

According to the tenth embodiment, there is provided the negative electrode for a lithium secondary battery as defined in any one of the first to the ninth embodiments, wherein the second negative electrode active material has a BET specific surface area of 0.5-2 $m^2$/g.

In another aspect of the present disclosure, there is provided a lithium secondary battery according to the following embodiment.

According to the eleventh embodiment, there is provided a lithium secondary battery including the negative electrode for a lithium secondary battery as defined in any one of the first to the tenth embodiments.

Advantageous Effects

The negative electrode for a lithium secondary battery according to an embodiment of the present disclosure includes a negative electrode active material layer, including a first negative electrode active material containing first graphite and an amorphous carbon layer disposed on the surface of the first graphite in combination with a second negative electrode active material containing second graphite and having no carbon layer on the surface of the second graphite, and thus is capable of quick charging/discharging and shows improvement in terms of a phenomenon in which the total specific surface area of the negative electrode is increased due to the cracking of the negative electrode active material in the pressing step during the manufacture of the negative electrode.

Particularly, the negative electrode for a lithium secondary battery according to an embodiment of the present disclosure includes a negative electrode active material layer, including a first negative electrode active material containing first graphite and an amorphous carbon layer disposed on the surface of the first graphite, and a second negative electrode active material containing second graphite and having no carbon layer on the surface of the second graphite at a predetermined range of weight ratio to improve the interfacial resistance on the surface, thereby facilitating quick charging/discharging. In addition, it is possible to minimize an increase in specific surface area of the negative electrode active material, caused by the cracking of the surfaces of the negative electrode active material particles due to the pressing step in the manufacture of the negative electrode.

In addition, the negative electrode for a lithium secondary battery according to an embodiment of the present disclosure has a specific range of total BET specific surface area of the negative electrode active material layer to provide the negative electrode with improved surface reactivity at high temperature, thereby realizing improved high-temperature characteristics and safety.

The lithium secondary battery according to an embodiment of the present disclosure includes the above-described negative electrode for a lithium secondary battery, and thus is capable of quick charging/discharging and has improved high-temperature characteristics and safety.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

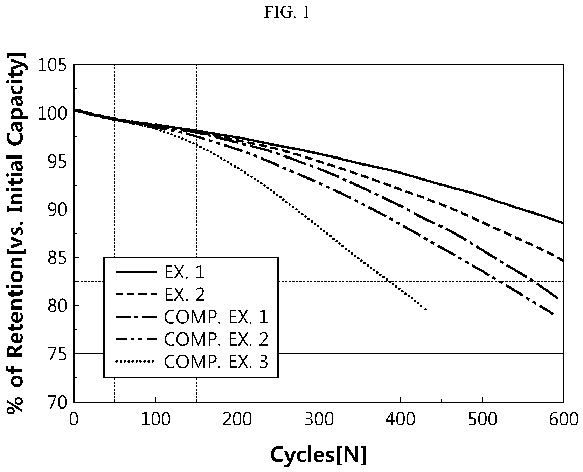

FIG. 1 is a graph illustrating the capacity retention of each of the lithium secondary batteries according to Examples 1 and 2 and Comparative Examples 1-3, as determined by taking one cycle, including charging each battery in a constant current (CC) mode at a high temperature (45°C) at a rate of 1.5 C to 4.45 V, charging the battery in a constant voltage (CV) mode to a charge cut-off current of 0.005 C, and discharging the battery in a constant current mode at a rate of 1 C to 3 V.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In one aspect of the present disclosure, there is provided a negative electrode for a lithium secondary battery, including:

a negative electrode current collector; and
a negative electrode active material layer disposed on at least one surface of the negative electrode current collector, and including a first negative electrode active material containing first graphite and an amorphous carbon layer disposed on the surface of the first graphite, a second negative electrode active material containing second graphite and having no carbon layer on the surface of the second graphite, a conductive material, and a binder,
wherein the weight ratio of the first negative electrode active material to the second negative electrode active material is 4:6-6:4, and
the negative electrode active material layer has a BET specific surface area of 1.1-1.7 m$^2$/g.

The negative electrode current collector is not particularly limited, as long as it has high conductivity, while not causing any chemical change in the corresponding battery. For example, copper, stainless steel, aluminum, nickel, titanium, baked carbon, copper or stainless steel surface-treated with carbon, nickel, titanium, silver, etc., aluminum-cadmium alloy, or the like, may be used.

According to an embodiment of the present disclosure, the negative electrode current collector may have a thickness of 3-500 μm.

The first negative electrode active material includes the first graphite and the amorphous carbon layer disposed on the surface of the first graphite. The first negative electrode active material may have a core-shell structure including a first graphite particle core, and a shell formed of an amorphous carbon layer disposed on the surface of the core. The first negative electrode active material allows easy intercalation/deintercalation of lithium ions on the particle surfaces by virtue of the amorphous carbon layer formed on the surface of the first graphite, and can reduce the diffusion resistance of lithium ions. The negative electrode for a lithium secondary battery according to an embodiment of the present disclosure includes the first negative electrode active material including the first graphite and the amorphous carbon layer disposed on the surface of the first graphite, and thus can reduce the diffusion resistance of lithium ions, thereby facilitating quick charging/discharging.

According to an embodiment of the present disclosure, the first graphite may include natural graphite, artificial graphite, graphitized carbon fibers, graphitized mesocarbon microbeads, or two or more of them.

Natural graphite means graphite produced and mined in nature, and artificial graphite means graphite obtained by carbonizing coal-based and petroleum-based pitch at 2500°C or higher. Any artificial graphite may be used with no particular limitation, as long as it is one prepared by the conventional method known to those skilled in the art. Non-limiting examples of artificial graphite include artificial graphite obtained by firing mesophase carbon microbeads (MCMBs), mosaic cokes, or the like, at 2800-3000°C. According to an embodiment of the present disclosure, the first graphite may include artificial graphite. When the first graphite includes artificial graphite, the edges of crystal surfaces are less exposed on the particle surfaces, as compared to natural graphite, and thus such artificial graphite has a relatively smaller specific surface area, thereby reducing side reactions on the surface with ease.

According to an embodiment of the present disclosure, the first graphite may have an average particle diameter of 3-25 $\mu$m, or 5-25 $\mu$m. When the average particle diameter of the first graphite satisfies the above-defined range, it is able to prevent the technical problem of an increased specific surface area of the first graphite and a decrease in initial efficiency of a battery. In addition, it is possible to easily prevent the problems of a decrease in adhesion to the current collector and degradation of battery capacity, caused by a decrease in packing density.

As used herein, the term 'average particle diameter' means $D_{50}$ particle diameter, and '$D_{50}$ particle diameter' means a particle diameter at a point of 50% in the accumulated particle number distribution depending on particle diameter. The particle diameter, $D_{50}$, may be determined by using a laser diffraction method. Particularly, powder to be analyzed is dispersed in a dispersion medium and introduced to a commercially available laser diffraction particle size analyzer (e.g. Microtrac S3500), and then a difference in diffraction pattern depending on particle size is determined, when particles pass through laser beams, and then particle size distribution is calculated. Then, the particle diameter at a point of 50% of the particle number accumulated distribution depending on particle diameter is calculated to determine $D_{50}$.

According to an embodiment of the present disclosure, the amorphous carbon layer may include an amorphous carbon derived from glucose, fructose, galactose, maltose, lactose, sucrose, phenolic resin, naphthalene resin, polyvinyl alcohol resin, urethane resin, polyimide resin, coal-based pitch, petroleum-based pitch, low-molecular weight heavy oil, or two or more of them.

According to an embodiment of the present disclosure, the amorphous carbon layer may be present in an amount of 1-20 wt%, 1-10 wt%, 1-3 wt%, or 3-10 wt%, based on 100 wt% of the total weight of the first negative electrode active material. When the content of the amorphous carbon layer satisfies the above-defined range, it is possible to reduce the diffusion resistance of lithium ions and to ensure the capacity of the negative electrode active material with ease.

For example, the content of the amorphous carbon layer may be calculated by heat treating the first negative electrode active material at 1000°C and determining a ratio of a decrease in weight, but is not limited thereto.

According to an embodiment of the present disclosure, the amorphous carbon layer may have a thickness of 1-1000 nm, 5-800 nm, 5-500 nm, or 500-800 nm. When the thickness of the amorphous carbon layer satisfies the above-defined range, a solid electrolyte interphase (SEI) layer may be formed stably with ease. In addition, lithium-ion conductivity is ensured, and thus quick charging/discharging characteristics may be ensured with ease.

For example, the thickness of the amorphous carbon layer may be determined by using a transmission electron microscope (TEM), or the like, but is not limited thereto.

According to an embodiment of the present disclosure, the first negative electrode active material may have an average particle diameter of 5-30 $\mu$m, 5-20 $\mu$m, 9-17 $\mu$m, 9-15 $\mu$m, or 15-17 $\mu$m. When the average particle diameter of the first negative electrode active material satisfies the above-defined range, it is able to prevent the problem of an increased specific surface area of the first negative electrode active material and a decrease in initial efficiency of a battery. In addition, it is possible to easily prevent the problems of a decrease in adhesion to the current collector and degradation of battery capacity, caused by a decrease in packing density. When the average particle diameter of the first negative electrode active material satisfies the above-defined range, the negative electrode active material layer may have a total BET specific surface area of 1.1-1.7 m$^2$/g with ease.

According to an embodiment of the present disclosure, the first negative electrode active material may have a BET specific surface area of 0.5-2 m$^2$/g, 0.7-1.5 m$^2$/g, 0.7-0.9 m$^2$/g, or 0.9-1.5 m$^2$/g. When the BET specific surface area of the first negative electrode active material satisfies the above-defined range, it is possible to prevent the problems of degradation of output characteristics during charge/discharge, degradation of initial efficiency, and an increase in side reactions on the surface. When the first negative electrode active material satisfies the above-defined range of BET specific surface area, the negative electrode active material layer may have a total BET specific surface area of 1.1-1.7 m$^2$/g with ease.

The BET specific surface area may be determined by the Brunauer-Emmett-Teller (BET) method. For example, the BET specific surface area may be determined as follows. The first negative electrode active material is introduced to a standard sample cell (glass), and dried at 130°C under vacuum for 2 hours. Liquid nitrogen is introduced to a liquid nitrogen container for the purpose of determination in the container at 77K. The standard sample cell is cooled and then fixed to a test system, BELSORP-mino II (BEL Japan Co.) for the purpose of determination in liquid nitrogen. Then, a test program is operated to determine the BET specific surface area through a process of adsorption/desorption to/from the surface of the first negative electrode active material sampled under nitrogen gas atmosphere.

The second negative electrode active material includes the second graphite and has no carbon layer on the surface of the second graphite. Since the second negative electrode active material has no carbon layer on the surface thereof, it shows low surface hardness to minimize cracking of the particles in a pressing step during the manufacture of the negative electrode. Therefore, since the negative electrode for a lithium secondary battery according to an embodiment of the present disclosure includes the second negative electrode active material in addition to the first negative electrode active material, quick charging/discharging is facilitated, while improving the phenomenon of an increase in specific surface area caused by cracking of the surface of the negative electrode active material.

According to an embodiment of the present disclosure, the second graphite may include natural graphite, artificial graphite, graphitized carbon fibers, graphitized mesocarbon microbeads, or two or more of them. According to an embodiment of the present disclosure, the second graphite may include artificial graphite. When the second graphite includes artificial graphite, the edges of crystal surfaces are less exposed on the particle surfaces, as compared to natural graphite, and thus such artificial graphite has a relatively smaller specific surface area, thereby reducing side reactions on the surface with ease.

According to an embodiment of the present disclosure, the second negative electrode active material may have an average particle diameter of 13-25 $\mu$m, or 14-18 $\mu$m. When the average particle diameter of the second negative electrode active material satisfies the above-defined range, it is able to prevent the problem of an increased specific surface area of the second negative electrode active material and a decrease in initial efficiency of a battery. In addition, it is possible to easily prevent the problems of a decrease in adhesion to the current collector and degradation of battery capacity, caused by a decrease in packing density. When the average particle diameter of the second negative electrode active material satisfies the above-defined range, the negative electrode active material layer may have a total BET specific surface area of 1.1-1.7 m$^2$/g with ease.

According to an embodiment of the present disclosure, the second negative electrode active material may have a BET specific surface area of 0.5-2 m$^2$/g, 0.9-1.8 m$^2$/g, 0.9-1.3 m$^2$/g, or 1.3-1.8 m$^2$/g. When the BET specific surface area of the second negative electrode active material satisfies the above-defined range, it is possible to prevent the problems of degradation of output characteristics during charge/discharge, degradation of initial efficiency, and an increase in side reactions on the surface. When the secondary negative electrode active material satisfies the above-defined range of BET specific surface area, the negative electrode active material layer may have a total BET specific surface area of 1.1-1.7 m$^2$/g with ease.

The BET specific surface area may be determined by the Brunauer-Emmett-Teller (BET) method. For example, the BET specific surface area may be determined as follows. The second negative electrode active material is introduced to a standard sample cell (glass), and dried at 130°C under vacuum for 2 hours. Liquid nitrogen is introduced to a liquid nitrogen container for the purpose of determination in the container at 77K. The standard sample cell is cooled and then fixed to a test system, BELSORP-mino II (BEL Japan Co.) for the purpose of determination in liquid nitrogen. Then, a test program is operated to determine the BET specific surface area through a process of adsorption/desorption to/from the surface of the second negative electrode active material sampled under nitrogen gas atmosphere.

According to the present disclosure, the weight ratio of the first negative electrode active material to the second negative electrode active material is 4:6-6:4. When the weight ratio of the first negative electrode active material to the second negative electrode active material satisfies the above-defined range, electroconductivity is improved and interfacial resistance on the surface is improved to facilitate quick charging/discharging. In addition, it is possible to minimize an increase in specific surface area of the negative electrode active material, caused by cracking of the negative electrode active material particles during a pressing step in the manufacture of the negative electrode.

When the weight ratio of the first negative electrode active material to the second negative electrode active material is less than 4:6, interfacial resistance on the whole surface of the negative electrode active material layer is increased, and thus lithium ions cannot be intercalated into the negative electrode active material with ease, which is not favorable to quick charging/discharging.

When the weight ratio of the first negative electrode active material to the second negative electrode active material is larger than 6:4, cracking of the active material during a pressing step becomes severe, and thus the total BET specific surface area of the negative electrode active material is increased excessively, resulting in degradation of the life and safety of the lithium secondary battery including the negative electrode at high temperature.

According to an embodiment of the present disclosure, the weight ratio of the first negative electrode active material to the second negative electrode active material may be 5:5. When the weight ratio of the first negative electrode active material to the second negative electrode active material is 5:5, surface reactivity of the negative electrode at high temperature may be further enhanced, and thus the high-temperature characteristics and safety of the negative electrode and the lithium secondary battery including the negative electrode may be further improved.

According to an embodiment of the present disclosure, the total content of the first negative electrode active material and the second negative electrode active material may be 80-98 wt%, or 90-98 wt%, based on 100 wt% of the total weight of the negative electrode active material layer. When the content of the first negative electrode active material and the second negative electrode active material satisfies the above-defined range, it is easy to ensure conductivity, while realizing the capacity of the battery sufficiently, and to prevent an increase in resistance. In addition, it is easy to ensure adhesion to the current collector, while ensuring processability.

According to an embodiment of the present disclosure, the conductive material may be added in an amount of 1-10 wt%, based on 100 wt% of the negative electrode active material layer. The conductive material is not particularly limited, as long as it has conductivity, while causing no chemical change in the corresponding battery. Particular examples of the conductive material include: graphite, such as natural graphite or artificial graphite; carbon black, such as acetylene black, Ketjen black, channel black, furnace black, lamp black or thermal black; conductive fibers, such as carbon fibers or metallic fibers; fluorocarbon; metal powder, such as aluminum or nickel powder; conductive whisker, such as zinc oxide or potassium titanate; conductive metal oxide, such as titanium oxide; and conductive materials, such as polyphenylene derivatives.

The binder is an ingredient which assists binding between the active material and the conductive material and binding to the current collector. In general, the binder may be added in an amount of 1-10 wt% based on the total weight of the negative electrode active material layer. Particular examples of the binder include polyvinylidene fluoride (PVDF), polyacrylic acid (PAA), polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene terpolymer (EPDM), sulfonated EPDM, styrene-butadiene rubber, fluoro-rubber, various copolymers, or the like.

As the BET specific surface area of the negative electrode active material layer is increased, surface reactivity is increased, resulting in an increase in content of a solid electrolyte interphase (SEI) layer. The SEI layer formed on the surface of the negative electrode is decomposed at high temperature to emit heat and to generate gases, thereby causing an internal short circuit in the battery and finally affecting the thermal safety of the negative electrode and the battery significantly. As the BET specific surface area of the negative electrode active material layer is increased, the content of the SEI layer is increased, and thus heat emission caused by decomposition of the SEI layer is further increased, resulting in significant degradation of the thermal safety of the negative electrode and the battery.

According to present disclosure, the negative electrode active material layer has a BET specific surface area of 1.1-1.7 m$^2$/g. Herein, the BET specific surface area of the negative electrode active material layer refers to the BET specific surface area of the whole negative electrode active material layer including the mixture of the first negative electrode active material, the second negative electrode active material, the conductive material and the binder, and is different from the BET specific surface area of each of the first negative electrode active material and the second negative electrode active material. The BET specific surface area of the negative electrode active material layer means the BET specific surface area of the negative electrode active material layer after pressing. When the BET specific surface area of the negative electrode active material layer satisfies the above-defined range, interfacial resistance on the surface of the negative electrode active material layer is improved to ensure quick charging characteristics, while reducing the side reactions and heat emission caused by decomposition of the SEI layer at high temperature. The lithium secondary battery provided with the negative electrode including the negative electrode active material layer shows improved life characteristics and capacity retention at high temperature and ensures safety against ignition at high temperature. Herein, 'high temperature' means a temperature of 45°C or higher.

When the BET specific surface area of the negative electrode active material layer is less than 1.1 m$^2$/g, interfacial resistance on the surface of the negative electrode active material layer is high, resulting in degradation of quick charging characteristics.

When the BET specific surface area of the negative electrode active material layer is larger than 1.7 m$^2$/g, surface reactivity is increased, and side reactions are also increased at high temperature. In addition, heat emission caused by decomposition of the SEI layer is increased, which may cause battery ignition, and thus it is not possible to ensure the life and stability of the battery at high temperature.

The BET specific surface area of the negative electrode active material layer may be determined by the types and contents of the first graphite, the amorphous carbon layer and the second negative electrode active material, pressing density of the electrode, or the like.

According to an embodiment of the present disclosure, the BET specific surface area of the negative electrode active material layer may also be affected by the pressing density of the electrode, besides the composition thereof. For example, as the pressing density of the electrode is increased, the electrode shows lower porosity, and thus the BET specific surface area of the negative electrode active material layer may be varied.

According to an embodiment of the present disclosure, the negative electrode active material layer may have a porosity of 20-30%, 20-26%, or 26-30%. When the porosity of the negative electrode active material layer satisfies the above-defined range, it is easy for the negative electrode active material layer to have a BET specific surface area of 1.1-1.7 m$^2$/g. In other words, when the weight ratio of the first negative electrode active material to the second negative electrode active material satisfies a range of 4:6-6:4, and the negative electrode active material layer has a porosity of 20-30%, it is easy for the negative electrode active material layer to have a BET specific surface area of 1.1-1.7 m$^2$/g.

Particularly, when the weight ratio of the first negative electrode active material to the second negative electrode active material is 5:5, and the negative electrode active material layer has a porosity of 20-30%, it is easy for the negative electrode active material layer to have a BET specific surface area of 1.1-1.7 $m^2$/g.

According to an embodiment of the present disclosure, the negative electrode active material layer may have a BET specific surface area of 1.12-1.69 $m^2$/g. When the BET specific surface area of the negative electrode active material layer satisfies the above-defined range, interfacial resistance on the surface of the negative electrode active material layer is improved to reduce side reactions at high temperature, thereby facilitating improvement of quick charging characteristics. In addition, it is easy to reduce heat emission caused by decomposition of the SEI layer. Therefore, it is possible to improve high-temperature characteristics and safety with ease.

The BET specific surface area of the negative electrode active material layer may be determined by the following method. A completely dried negative electrode (including the negative electrode current collector) is cut into a size of 8 mm x 8 mm, and 30 sheets of such negative electrode samples are prepared. Herein, the negative electrode active material layer has a thickness of about 80 $\mu$m and a loading amount controlled to 3.6 mAh/$cm^2$. The sampled negative electrode active material layer is introduced to a standard sample cell (glass), and dried at 130°C under vacuum for 2 hours. Liquid nitrogen is introduced to a liquid nitrogen container for the purpose of determination in the container at 77K. The standard sample cell is cooled and then fixed to a test system, BELSORP-mino II (BEL Japan Co.) for the purpose of determination in liquid nitrogen. Then, a test program is operated to determine the BET specific surface area through a process of adsorption/desorption to/from the surface of the electrode sampled under nitrogen gas atmosphere. Herein, when calculating the BET specific surface area, the weight of the negative electrode active material layer excluding the negative electrode current collector is input as the weight of a sample.

According to an embodiment of the present disclosure, the negative electrode active material layer may have a total pore volume of 0.010-0.017 $cm^3$/g.

Herein, the total pore volume of the negative electrode active material layer means the pore volume of the whole negative electrode active material layer including the mixture of the first negative electrode active material, the second negative electrode active material, the conductive material and the binder, and is different from the pore volume of each of the first negative electrode active material and the second negative electrode active material. The total pore volume of the negative electrode active material layer means the total pore volume of the negative electrode active material layer after pressing. For example, the total pore volume of the negative electrode active material layer may be determined when the BET specific surface of the negative electrode active material layer is determined, or may be determined by using mercury intrusion porosimetry, micro CT, or the like.

The negative electrode for a lithium secondary battery according to an embodiment of the present disclosure includes a negative electrode active material layer, including a first negative electrode active material containing first graphite and an amorphous carbon layer disposed on the surface of the first graphite in combination with a second negative electrode active material containing second graphite and having no carbon layer on the surface of the second graphite, and thus shows improvement in terms of a phenomenon in which the total specific surface area of the negative electrode is increased due to the cracking of the negative electrode active material in the pressing step during the manufacture of the negative electrode, and is capable of quick charging/discharging. Therefore, it is possible to ensure high-temperature characteristics and safety.

The negative electrode for a lithium secondary battery according to an embodiment of the present disclosure shows a charge rate of 1.5 C and a charge level of 75% or more within 25 minutes.

In the negative electrode for a lithium secondary battery according to an embodiment of the present disclosure, the negative electrode active material layer has a predetermined range of BET specific surface area after pressing, and thus shows improved surface reactivity to provide improved high- temperature characteristics and safety.

The negative electrode for a lithium secondary battery may be manufactured by the following method, but the method for manufacturing the negative electrode is not limited thereto.

In still another aspect of the present disclosure, there is provided a method for manufacturing a negative electrode according to an embodiment of the present disclosure, including the steps of:

preparing a first negative electrode active material including first graphite and an amorphous carbon layer disposed on the surface of the first graphite;
preparing a negative electrode active material slurry including the first negative electrode active material prepared in the preceding step, a second negative electrode active material including second graphite and having no carbon layer on the surface of the second graphite, a conductive material, a binder and a dispersion medium; and
coating the negative electrode active material slurry on at least one surface of a negative electrode current collector, followed by pressing and drying.

Hereinafter, the method for manufacturing a negative electrode according to an embodiment of the present disclosure will be explained in detail with reference to the main parts thereof.

First, prepared is a first negative electrode active material including first graphite and an amorphous carbon layer disposed on the surface of the first graphite. Reference will be made to the above description about the first graphite and the amorphous carbon layer.

There is no particular limitation in the method for forming the amorphous carbon layer on the surface of the first graphite, and any method generally known to those skilled in the art may be used. For example, a carbonaceous precursor material is coated directly on the first graphite, and then heat treatment may be carried out. Particularly, the first graphite may be mixed with or dipped in the carbonaceous precursor material, and then heat treatment may be carried out at 700-1300°C. When the heat treatment is carried out with the above-defined range of temperature, it is possible to form an amorphous carbon layer, while not affecting the crystal structure of the first graphite, or the like. In a variant, the amorphous carbon layer may be formed through the chemical vapor deposition of the carbonaceous precursor material.

Next, prepared is a negative electrode active material slurry including the prepared first negative electrode active material, a second negative electrode active material including second graphite and having no carbon layer on the surface of the second graphite, a conductive material, a binder and a dispersion medium.

Reference will be made to the above description about the first negative electrode active material, the second negative electrode active material, the conductive material and the binder.

The dispersion medium may function as a solvent capable of dissolving the binder, or as a dispersion medium not capable of dissolving the binder but capable of dispersing the binder, depending on the particular type of the binder.

According to an embodiment of the present disclosure, the dispersion medium may include N-methyl-2-pyrrolidone, acetone, methyl ethyl ketone, dimethylformamide, dimethylacetamide, methanol, ethanol, isopropyl alcohol, or two or more organic solvents of them, or water.

Next, the negative electrode active material slurry is coated on at least one surface of the negative electrode current collector, followed by pressing and drying.

Reference will be made to the above description about the negative electrode current collector.

The negative electrode active material slurry may be coated on at least one surface of the negative electrode current collector. Non-limiting examples of the coating method include dip coating, die coating, roll coating, comma coating, doctor blade coating, reverse roll coating, direct roll coating, or the like.

The coated negative electrode active material slurry may be dried by using a method used conventionally for drying a negative electrode. For example, the coated negative electrode active material slurry may be dried at 80-150°C, 80-110°C, or 110-150°C by using air for 30 seconds to 5 minutes, 30 seconds to 2 minutes, or 2-5 minutes. When the drying time is within the above-defined range, it is possible to remove the residual solvent, while not adversely affecting the productivity.

The negative electrode for a lithium secondary battery may be used to manufacture a lithium secondary battery together with a positive electrode and a separator.

The lithium secondary battery according to the present disclosure shows improved life characteristics and capacity retention at high temperature and improved safety against ignition at high temperature by using the negative electrode for a lithium secondary battery according to an embodiment of the present disclosure.

The lithium secondary battery may include a lithium metal secondary battery, a lithium-ion secondary battery, a lithium polymer secondary battery, a lithium-ion polymer secondary battery, or the like.

The positive electrode used in combination with the negative electrode for a lithium secondary battery according to the present disclosure is not particularly limited, and may be obtained by allowing a positive electrode active material layer containing a positive electrode active material, a conductive material and a binder to be bound to a positive electrode current collector through a method generally known in the art.

The positive electrode active material may be any positive electrode active material used conventionally for a positive electrode of a lithium secondary battery, and a lithium-containing transition metal oxide may be used. Particular examples of the lithium-containing transition metal oxide include $LiCoO_2$, $LiNiO_2$, $LiMnO_2$, $LiMn_2O_4$, $Li(Ni_aCo_bMn_c)O_2$ ($0 < a < 1$, $0 < b < 1$, $0 < c < 1$, $a + b + c = 1$), $LiNi_{1-y}Co_yO_2$, $LiCo_{1-y}Mn_yO_2$, $LiNi_{1-y}Mn_yO_2$ ($0 \leq y < 1$), $Li(Ni_aCo_bMn_c)O_4$ ($0 < a < 2$, $0 < b < 2$, $0 < c < 2$, $a + b + c = 2$), $LiMn_{2-z}Ni_zO_4$, $LiMn_{2-z}Co_zO_4$ ($0 < z < 2$), $LiCoPO_4$, $LiFePO_4$, or two or more of them. In addition to such oxides, sulfides, selenides and halides may also be used.

Non-limiting examples of the positive electrode current collector include foil made of aluminum, nickel or a combination thereof.

The conductive material used in the positive electrode active material layer may be added in an amount of 1-30 wt% based on the total weight of the positive electrode active material layer. The conductive material is not particularly limited, as long as it causes no chemical change in the corresponding battery and has conductivity. Particular examples of the conductive material include: graphite, such as natural graphite or artificial graphite; carbon black, such as acetylene black, Ketjen black, channel black, furnace black, lamp black or thermal black; conductive fibers, such as carbon fibers or metallic fibers; fluorocarbon; metal powder, such as aluminum or nickel powder; conductive whisker, such as zinc oxide or potassium titanate; conductive metal oxide, such as titanium oxide; conductive materials, such as polyphenylene derivatives, or the like.

The binder contained in the positive electrode active material layer is an ingredient which assists binding between the active material and the conductive material and binding to the current collector. In general, the binder may be added in an amount of 1-30 wt% based on the total weight of the active material layer. Particular examples of the binder include polyvinylidene fluoride (PVDF), polyacrylic acid (PAA), polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene terpolymer (EPDM), sulfonated EPDM, styrene-butadiene rubber, fluoro-rubber, various copolymers, or the like.

The separator used in the lithium secondary battery according to the present disclosure is not particularly limited, and may include: a porous polymer substrate; and an organic/inorganic composite porous layer formed on at least one surface of the porous polymer substrate and including a plurality of inorganic particles and a binder polymer. The separator is interposed between the positive electrode and the negative electrode and functions to insulate the positive electrode and the negative electrode from each other.

Any porous polymer substrate may be used, as long as it is one used conventionally in the art. For example, the porous polymer substrate may include a polyolefin-based porous polymer membrane or nonwoven web, but is not limited thereto.

Non-limiting examples of the polyolefin-based porous polymer membrane include membranes made of polyolefin polymers, such as polyethylene, including high-density polyethylene, linear low-density polyethylene, low-density polyethylene or ultrahigh-molecular weight polyethylene, polypropylene, polybutylene, or polypentene, alone or in combination of two or more of them.

Besides polyolefin-based nonwoven webs, the nonwoven web may include nonwoven webs formed of polyethylene terephthalate, polybutylene terephthalate, polyester, polyacetal, polyamide, polycarbonate, polyimide, polyetherether ketone, polyether sulfone, polyphenylene oxide, polyphenylene sulfide, or polyethylene naphthalene, alone or in combination. The nonwoven webs may have a structure of spunbond nonwoven webs or melt blown nonwoven webs including long fibers.

Although there is no particular limitation in the thickness of the porous polymer substrate, the porous polymer substrate may have a thickness of 3-50 $\mu$m, or 3-15 $\mu$m. Although there is no particular limitation in the size of the pores and porosity in the porous polymer substrate, the pore size and porosity may be 0.01-50 $\mu$m and 10-95%, respectively.

There is no particular limitation in the inorganic particles, as long as they are electrochemically stable. In other words, there is no particular limitation in the inorganic particles that may be used herein, as long as they cause no oxidation and/or reduction in the range (e.g. 0-5 V based on Li/Li$^+$) of operating voltage of an applicable battery. According to an embodiment of the present disclosure, the inorganic particles may include high-dielectric constant inorganic particles having a dielectric constant of 5 or more, or 10 or more, inorganic particles having lithium-ion transportability, or two or more of them. Non-limiting examples of the inorganic particles having a dielectric constant of 5 or more may include any one selected from BaTiO$_3$, BaSO$_4$, Pb(Zr,Ti)O$_3$ (PZT), Pb$_{1-x}$La$_x$Zr$_{1-y}$Ti$_y$O$_3$ (PLZT, wherein 0 < x < 1, and 0 < y < 1), Pb(Mg$_{1/3}$Nb$_{2/3}$)O$_3$-PbTiO$_3$ (PMN-PT), hafnia (HfO$_2$), SrTiO$_3$, SnO$_2$, CeO$_2$, MgO, Mg(OH)$_2$, NiO, CaO, ZnO, ZrO$_2$, Y$_2$O$_3$, SiO$_2$, Al$_2$O$_3$, $\gamma$-AlOOH, Al(OH)$_3$, SiC, TiO$_2$, or the like, or a mixture of two or more of them. However, the scope of the present disclosure is not limited thereto.

According to an embodiment of the present disclosure, although there is no particular limitation in the particle size of the inorganic particles, the inorganic particles may have a particle size of about 0.01-10 $\mu$m or about 0.05-1.0 $\mu$m with a view to formation of a coating layer having a uniform thickness and suitable porosity. Herein, the average particle diameter of the inorganic particles means a particle diameter (D$_{50}$) corresponding to 50% of the accumulated value from smaller particles calculated based on the results of determining the particle size distribution of the particles after classification using a general particle size distribution analyzer. The particle size distribution may be determined by the laser diffraction method.

According to an embodiment of the present disclosure, the binder polymer contained in the separator may include, but is not limited to: polyvinylidene fluoride (PVDF), polyvinylidene fluoride-co-hexafluoropropylene, polyvinylidene fluoride-co-trichloroethylene, polyvinylidene fluoride-co-chlorotrifluoroethylene, polymethyl methacrylate, polyacrylonitrile, polyvinyl pyrrolidone, polyvinyl acetate, polyethylene-co-vinyl acetate, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, acrylonitrile-styrene-butadiene copolymer, imide, or two or more of them.

According to an embodiment of the present disclosure, the weight ratio of the inorganic particles to the binder polymer contained in the separator may be 20:80-99.9:0.1, 50:50-99.5:0.5, or 70:30-80:20. When the weight ratio of the inorganic particles to the binder polymer falls within the above-defined range, it is possible to ensure vacant spaces formed among the inorganic particles sufficiently, while ensuring sufficient adhesion among the inorganic particles.

According to an embodiment of the present disclosure, the organic/inorganic composite porous layer may have a structure in which the inorganic particles are bound to one another by the binder polymer, while they are packed in contact with one another. In this manner, interstitial volumes are formed among the inorganic filler particles, and the interstitial volumes become vacant spaces to form pores.

According to an embodiment of the present disclosure, the lithium secondary battery includes an electrolyte, which may include an organic solvent and a lithium salt. In addition, the electrolyte may include an organic solid electrolyte or an inorganic solid electrolyte.

Particular examples of the organic solvent include aprotic organic solvents, such as N-methyl-2-pyrrolidone, ethylene carbonate, propylene carbonate, butylene carbonate, dimethyl carbonate, diethyl carbonate, γ-butyrolactone, 1,2-dimethoxyethane, tetrahydrofuran, 2-methyl tetrahydrofuran, dimethyl sulfoxide, 1,3-dioxolan, formamide, dimethyl formamide, dioxolan, acetonitrile, nitromethane, methyl formate, methyl acetate, triphosphate, trimethoxymethane, dioxolan derivatives, sulfolane , methyl sulfolane , 1,3-dimethyl-2-imidazolidinone, propylene carbonate derivatives, tetrahydrofuran derivatives, ethers, methyl propionate, ethyl propionate, or the like.

The lithium salt is a material which can be dissolved in the non-aqueous electrolyte with ease, and particular examples thereof include LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, lithium chloroborane , lithium lower aliphatic carboxylate, lithium tetraphenyl borate, imide, or the like.

In addition, the electrolyte may further include pyridine, triethyl phosphite, triethanolamine, cyclic ethers, ethylene diamine, n-glyme, triamide hexaphosphate, nitrobenzene derivatives, sulfur, quinone imine dyes, N-substituted oxazolidinone, N,N-substituted imidazolidine, ethylene glycol dialkyl ether, ammonium salt, pyrrole, 2-methoxyethaol and aluminum trichloride in order to improve the charge/discharge characteristics, flame resistance, or the like. Optionally, the electrolyte may further include a halogen-containing solvent, such as carbon tetrachloride or trifluoroethylene, in order to impart non-combustibility. The electrolyte may further include carbon dioxide gas in order to improve the high-temperature storage characteristics.

Particular examples of the organic solid electrolyte may include polyethylene derivatives, polyethylene oxide derivatives, polypropylene oxide derivatives, phosphate polymer, polyagitation lysine, polyester sulfide, polyvinyl alcohol, polyvinylidene fluoride, polymers containing an ionically dissociable group, or the like.

Particular examples of the inorganic solid electrolyte may include nitrides, halides and sulfates of Li, such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH and $Li_3PO_4$-$Li_2S$-$SiS_2$.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

According to an embodiment of the present disclosure, the separator for a lithium secondary battery may be applied to a battery through the lamination (stacking) and folding of the separator with electrodes, besides a conventional process, winding.

According to an embodiment of the present disclosure, the separator for a lithium secondary battery may be interposed between the positive electrode and the negative electrode of a lithium secondary battery. When an electrode assembly is formed by assembling a plurality of cells or electrodes, the separator may be interposed between the adjacent cells or electrodes. The electrode assembly may have various structures, such as a simple stack type, a j elly-roll type, a stacked-folded type, a laminated-stacked type, or the like.

Although the outer shape of the lithium secondary battery is no particularly limited, the lithium secondary battery may have a cylindrical shape using a can, a pouch-like shape or a coin-like shape.

MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

**Example 1**

Manufacture of Negative Electrode for Lithium Secondary Battery

Artificial graphite (available from shanshan Co.) as first graphite was coated with pitch and heat treated at 1000-1300°C to prepare a first negative electrode active material (average particle diameter: 15 μm, BET specific surface area: 0.9 m²/g) including an amorphous carbon layer on the surface of the first graphite.

The content of the amorphous carbon layer in the first negative electrode active material was 3 wt% based on 100 wt% of the first negative electrode active material, and the amorphous carbon layer had a thickness of about 500 nm.

Then, the first negative electrode active material was mixed with artificial graphite (average particle diameter: 18 $\mu$m, BET specific surface area: 1.3 m$^2$/g) at a weight ratio of 5:5, and the mixed negative electrode active materials, carbon black as a conductive material, styrene butadiene rubber (SBR) as a binder and carboxymethyl cellulose (CMC) were mixed at a weight ratio of 96.05:0.5:2.3:1.15 to prepare a negative electrode active material slurry.

The negative electrode active material slurry was coated on one surface of copper foil having a thickness of 8 $\mu$m, pressing was carried out by using a roll press, and the resultant structure was dried under vacuum to obtain a negative electrode for a lithium secondary battery. Herein, the resultant negative electrode had a porosity of 26%.

Manufacture of Lithium Secondary Battery

A positive electrode active material slurry prepared by mixing LiCoO$_2$ as a positive electrode active material, PVDF as a binder and acetylene black as a conductive material at a weight ratio of 96.5:1.5:2 was coated on one surface of aluminum foil having a thickness of 10 $\mu$m, followed by drying and pressing, to obtain a positive electrode.

A polyethylene substrate having a thickness of 10 $\mu$m was interposed between the positive electrode and the negative electrode obtained as described above, followed by pressurization, to obtain an electrode assembly.

An electrolyte (EC:PC:EP:PP = 2:1:2.5:4.5, LiPF$_6$ 1.4 M) (ion conductivity $\geq$ 6.5 mS/cm) was injected to the electrode assembly obtained as described above to obtain a lithium secondary battery.

**Example 2**

A negative electrode for a lithium secondary battery and a lithium secondary battery were obtained in the same manner as Example 1, except that the first negative electrode active material and the second negative electrode active material used in Example 1 were mixed at a weight ratio of 6:4. Herein, the resultant negative electrode had a porosity of 26%.

**Comparative Example 1**

A negative electrode for a lithium secondary battery and a lithium secondary battery were obtained in the same manner as Example 1, except that the first negative electrode active material according to Example 1 was used alone. Herein, the resultant negative electrode had a porosity of 26%.

**Comparative Example 2**

A negative electrode for a lithium secondary battery and a lithium secondary battery were obtained in the same manner as Example 1, except that the first negative electrode active material and the second negative electrode active material used in Example 1 were mixed at a weight ratio of 7:3. Herein, the resultant negative electrode had a porosity of 26%.

**Comparative Example 3**

A negative electrode for a lithium secondary battery and a lithium secondary battery were obtained in the same manner as Example 1, except that the first negative electrode active material and the second negative electrode active material used in Example 1 were mixed at a weight ratio of 3:7. Herein, the resultant negative electrode had a porosity of 26%.

**Test Example 1: Determination of BET Specific Surface Area and Total Pore Volume of Negative Electrode Active Material Layer**

In the negative electrode for a lithium secondary battery according to each of Examples 1 and 2 and Comparative Examples 1-3, the BET specific surface area and total pore volume of the negative electrode active material layer were determined. The results are shown in the following Table 1.

The BET (Brunauer-Emmett-Teller) specific surface area of the negative electrode active material layer was determined by the following method.

A completely dried negative electrode (including the negative electrode current collector) was cut into a size of 8 mm x 8 mm, and 30 sheets of such negative electrode samples were prepared. The sampled negative electrode active material layer was introduced to a standard sample cell (glass), and dried at 130°C under vacuum for 2 hours. Liquid nitrogen was introduced to a liquid nitrogen container for the purpose of determination in the container at 77K. The standard sample cell was cooled and then fixed to a test system, BELSORP-mino II (BEL Japan Co.) for the purpose of determination in liquid nitrogen. Then, a test program was operated to determine the BET specific surface area through a process of adsorption/desorption to/from the surface of the electrode sampled under nitrogen gas atmosphere. Herein, when calculating the BET specific surface area, the weight of the negative electrode active material layer excluding the negative electrode current collector was input as the weight of a sample.

The total pore volume of the negative electrode active material layer was determined simultaneously with the determination of the BET specific surface area of the negative electrode active material layer.

[Table 1]

|  | BET specific surface area of negative electrode active material layer (m²/g) | Total pore volume of negative electrode active material layer (cm³/g) |
|---|---|---|
| Example 1 | 1.24 | 0.013 |
| Example 2 | 1.12 | 0.012 |
| Comparative Example 1 | 1.74 | 0.018 |
| Comparative Example 2 | 1.71 | 0.017 |
| Comparative Example 3 | 1.65 | 0.010 |

**Test Example 2: Evaluation of Capacity Retention of lithium Secondary Battery at High Temperature**

The lithium secondary battery according to each of Examples 1 and 2 and Comparative Examples 1-3 was, at 45°C, charged at 1.5 C rate to 4.45 V in a constant current (CC) mode and charged to a charge cut-current of 0.005 C in a constant voltage (CV) mode, and then discharged to 3 V at 1 C rate in a CC mode. The above charge/discharge cycle was taken as one cycle, and the capacity retention of the battery was determined after repeating cycles at 45°C.

The capacity retention was calculated according to the following formula:

$$\text{Capacity Retention} = (\text{Discharge capacity/Initial discharge capacity}) \text{ X } 100 \text{ (\%)}$$

The results are shown in FIG. 1.

As can be seen from FIG. 1, the lithium secondary battery according to each of Examples 1 and 2 shows a high capacity retention as compared to the lithium secondary batteries according to Comparative Examples 1-3.

**Test Example 3: Analysis of Hot Box Test Result**

The lithium secondary battery according to each of Examples 1 and 2 and Comparative Examples 1-3 was introduced to an oven, warmed from room temperature at a rate of 5°C/min, and allowed to stand at 140°C for 30 minutes. After reaching 140°C, the ratio of ignition within 30 minutes was determined. The results are shown in the following Table 2.

Herein, the ratio of ignition is obtained from the ratio of batteries in which a rapid increase in temperature and a decrease in voltage occur simultaneously with ignition due to a short-circuit in the batteries, while warming the batteries and maintaining the temperature.

[Table 2]

|  | Ratio of ignition at 140°C in hot box (%) |
|---|---|
| Example 1 | 20 |
| Example 2 | 30 |
| Comparative Example 1 | 100 |
| Comparative Example 2 | 100 |
| Comparative Example 3 | 60 |

As can be seen from Table 2, the lithium secondary battery according to each of Examples 1 and 2 shows a significantly lower ratio of ignition at 140°C as compared to the ratio of ignition at 140°C of the lithium secondary batteries according to each of Comparative Examples 1-3.

**Claims**

1. A negative electrode for a lithium secondary battery, comprising:

a negative electrode current collector; and
a negative electrode active material layer disposed on at least one surface of the negative electrode current collector, and comprising a first negative electrode active material containing first graphite and an amorphous carbon layer disposed on the surface of the first graphite, a second negative electrode active material containing second graphite and having no carbon layer on the surface of the second graphite, a conductive material, and a binder,
wherein the weight ratio of the first negative electrode active material to the second negative electrode active material is 4:6-6:4, and
the negative electrode active material layer has a BET specific surface area of 1.1-1.7 $m^2$/g.

2. The negative electrode for a lithium secondary battery according to claim 1, wherein the negative electrode active material layer has a total pore volume of 0.010-0.017 $cm^3$/g.

3. The negative electrode for a lithium secondary battery according to claim 1, wherein the first graphite comprises natural graphite, artificial graphite, graphitized carbon fibers, graphitized mesocarbon microbeads, or two or more of them.

4. The negative electrode for a lithium secondary battery according to claim 1, wherein the amorphous carbon layer comprises an amorphous carbon derived from glucose, fructose, galactose, maltose, lactose, sucrose, phenolic resin, naphthalene resin, polyvinyl alcohol resin, urethane resin, polyimide resin, coal-based pitch, petroleum-based pitch, low-molecular weight heavy oil, or two or more of them.

5. The negative electrode for a lithium secondary battery according to claim 1, wherein the amorphous carbon layer is present in an amount of 1-20 wt% based on 100 wt% of the total weight of the first negative electrode active material.

6. The negative electrode for a lithium secondary battery according to claim 1, wherein the first negative electrode active material has an average particle diameter of 5-30 μm.

7. The negative electrode for a lithium secondary battery according to claim 1, wherein the first negative electrode active material has a BET specific surface area of 0.5-2 m2/g.

8. The negative electrode for a lithium secondary battery according to claim 1, wherein the second graphite comprises natural graphite, artificial graphite, graphitized carbon fibers, graphitized mesocarbon microbeads, or two or more of them.

9. The negative electrode for a lithium secondary battery according to claim 1, wherein the second negative electrode active material has an average particle diameter of 13-25 μm.

10. The negative electrode for a lithium secondary battery according to claim 1, wherein the second negative electrode active material has a BET specific surface area of 0.5-2 $m^2$/g.

11. A lithium secondary battery comprising the negative electrode for a lithium secondary battery as defined in any one of claims 1 to 10.

FIG. 1

## INTERNATIONAL SEARCH REPORT

| International application No. |
|---|
| **PCT/KR2022/003682** |

| A. | CLASSIFICATION OF SUBJECT MATTER |
|---|---|

**H01M 4/133**(2010.01)i; **H01M 4/587**(2010.01)i; **H01M 10/0525**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/133(2010.01); H01M 10/0525(2010.01); H01M 4/02(2006.01); H01M 4/13(2010.01); H01M 4/36(2006.01); H01M 4/505(2010.01); H01M 4/58(2010.01); H01M 4/583(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지 (lithium secondary battery), 음극 (cathode), 흑연 (graphite), 비정질 탄소 (amorphous carbon), BET 비표면적 (BET Specific surface area)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2001-185147 A (ASAHI KASEI CORP.) 06 July 2001 (2001-07-06)<br>See abstract; paragraphs [0010]-[0011], [0016] and [0022]; and claims 1-4. | 1-11 |
| A | JP 6545663 B2 (ENVISION AESC ENERGY DEVICES LTD.) 17 July 2019 (2019-07-17)<br>See claims 1, 11 and 13-14; and paragraphs [0021]-[0030], [0034] and [0036]-[0038]. | 1-11 |
| A | KR 10-2020-0137189 A (LG CHEM, LTD.) 09 December 2020 (2020-12-09)<br>See entire document. | 1-11 |
| A | KR 10-2010-0072160 A (LS MTRON LTD. et al.) 30 June 2010 (2010-06-30)<br>See entire document. | 1-11 |
| A | KR 10-2014-0138764 A (AUTOMOTIVE ENERGY SUPPLY CORPORATION) 04 December 2014 (2014-12-04)<br>See entire document. | 1-11 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 June 2022** | **29 June 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
|---|
| **PCT/KR2022/003682** |

**C.    DOCUMENTS CONSIDERED TO BE RELEVANT**

| Category* | Citation of document, with indication, where appropriate, of the relevant passages | Relevant to claim No. |
|---|---|---|
| A | KR 10-2019-0102612 A (LG CHEM, LTD.) 04 September 2019 (2019-09-04) See entire document. | 1-11 |

Form PCT/ISA/210 (second sheet) (July 2019)

INTERNATIONAL SEARCH REPORT
Information on patent family members

International application No.

**PCT/KR2022/003682**

| Patent document cited in search report | | | Publication date (day/month/year) | Patent family member(s) | | | Publication date (day/month/year) |
|---|---|---|---|---|---|---|---|
| JP | 2001-185147 | A | 06 July 2001 | None | | | |
| JP | 6545663 | B2 | 17 July 2019 | EP | 3128586 | A4 | 13 September 2017 |
| | | | | JP | 06545663 | B2 | 17 July 2019 |
| | | | | US | 10749179 | B2 | 18 August 2020 |
| | | | | US | 2017-0179487 | A1 | 22 June 2017 |
| | | | | WO | 2015-152113 | A1 | 08 October 2015 |
| KR | 10-2020-0137189 | A | 09 December 2020 | CN | 113728459 | A | 30 November 2021 |
| | | | | EP | 3944367 | A1 | 26 January 2022 |
| | | | | WO | 2020-242257 | A1 | 03 December 2020 |
| KR | 10-2010-0072160 | A | 30 June 2010 | KR | 10-1445692 | B1 | 02 October 2014 |
| KR | 10-2014-0138764 | A | 04 December 2014 | CN | 104221204 | A | 17 December 2014 |
| | | | | EP | 2833463 | A1 | 04 February 2015 |
| | | | | EP | 2833463 | B1 | 07 December 2016 |
| | | | | JP | 2013-201052 | A | 03 October 2013 |
| | | | | JP | 5936406 | B2 | 22 June 2016 |
| | | | | US | 10020489 | B2 | 10 July 2018 |
| | | | | US | 2015-0044567 | A1 | 12 February 2015 |
| | | | | WO | 2013-146285 | A1 | 03 October 2013 |
| KR | 10-2019-0102612 | A | 04 September 2019 | CN | 111602274 | A | 28 August 2020 |
| | | | | EP | 3719883 | A1 | 07 October 2020 |
| | | | | KR | 10-2277734 | B1 | 16 July 2021 |
| | | | | US | 2021-0075016 | A1 | 11 March 2021 |
| | | | | WO | 2019-164347 | A1 | 29 August 2019 |

Form PCT/ISA/210 (patent family annex) (July 2019)

**EP 4 156 324 A1**

## REFERENCES CITED IN THE DESCRIPTION

### Patent documents cited in the description

- KR 1020210034291